# FASCICULE DE BREVET EUROPEEN

(11) **EP 1 433 725 B1**
(45) Date de publication et mention de la délivrance du brevet: **15.02.2006**
(21) Numéro de dépôt: 03356177.0
(22) Date de dépôt: 17.11.2003
(51) Int. Cl.: B65G 39/09

(54) **Rouleaux de convoyage et de manutention à axe escamotable**
Förderrolle mit einziehbarer Achse
Conveyor roller with retractable axle

(30) Priorité: 24.12.2002 FR 0216813
(43) Date de publication de la demande: 30.06.2004
(73) Titulaire: David S.A.S., 42000 Saint Etienne (FR)
(72) Inventeur: David, Claude, 42170 Saint Just Saint Rambert (FR); David, Patrick, 42000 Saint Etienne (FR)
(74) Mandataire: Dupuis, François

(56) Documents cités:
- US-A- 4 852 230
- US-A- 5 678 676
- US-A- 6 076 647

## Description

L'invention se rattache au secteur technique des rouleaux de manutention à axe escamotable dans un sens.

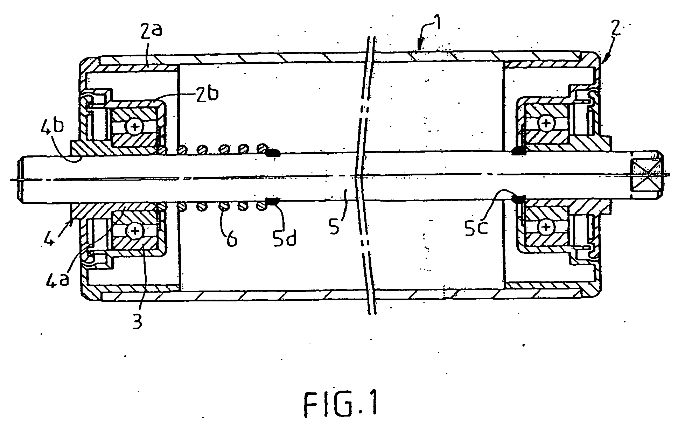

On a représenté figure 1 un rouleau à axe escamotable fabriqué et commercialisé par la Déposante, et ce, afin de mettre en valeur le problème posé à l'origine de la présente invention.

Ce rouleau présente un tube cylindrique (1) recevant à chaque extrémité un boîtier (2) à double jupe (2a-2b), l'une (2a) venant s'ajuster contre la paroi intérieure du tube et l'autre (2b) étant profilée pour former le siège d'un roulement à billes (3) et d'un corps (4) formant manchon et étant épaulé en (4a) pour la réception du roulement. Le boîtier peut être en matière plastique ou en un autre matériau. Le corps (4) présente intérieurement un alésage (4b) de passage de l'axe escamotable (5) dont les extrémités (5a-5b) débordent du tube cylindrique pour s'ajuster sur des bases réceptrices de la structure support des rouleaux. Cet axe (4a) peut être de profil hexagonal ou cylindrique ou autres formes.

L'axe escamotable est agencé avec deux lignes de fraisures (5c-5d), ou crans, ergots ou similaires. L'une (5c) ou similaire près de l'extrémité de l'un des corps (4) vient en butée arrière contre la face en regard de ce dernier. L'autre ligne (5d) ou similaire est disposée en retrait sur l'axe pour permettre le positionnement d'un moyen de rappel (6) du type ressort à boudins. La sollicitation de l'axe en vue de son escamotage partiel s'effectue à l'encontre du ressort de compression précité.

Une telle combinaison présente des inconvénients liés à la structure de ces rouleaux. Le coût de revient est élevé, car l'axe nécessite des opérations d'usinage, que le nombre de pièces est important avec un temps de montage élevé, le coût des composants, tels que l'axe acier hexagonal ou cylindrique, les roulements à billes, rend leur coût de revient prohibitif.

Le Demandeur a donc recherché une autre conception de rouleaux à axe escamotable, et ce, pour obvier aux inconvénients précités.
On connait par ailleurs par le document D1 US 4 852 230 un rouleau de convoyage dont le tube reçoit a chacune de ses extrémités un boîtier cylindrique s'ajustant à emmanchement ou sertissage dans la cavité correspondante, chaque boîtier étant agencé dans sa partie axiale médiane avec une portée annulaire intérieure formant logement et siège d'un moyen de roulement par rapport à l'axe escamotable.

Selon une première caractéristique de l'invention, le rouleau à axe escamotable dans un sens, du type comprenant un axe traversant un tube cylindrique et déplaçable à l'encontre d'un moyen de rappel, est remarquable en ce que ledit tube reçoit à chacune de ses extrémités un boîtier cylindrique s'ajustant à emmanchement ou sertissage dans la cavité correspondante, chaque boîtier étant agencé dans sa partie axiale médiane avec une portée annulaire intérieure formant logement et siège d'un moyen de roulement par rapport à l'axe escamotable et réception d'un capuchon recevant lui-même un embout de liaison solidarisé à l'axe escamotable, l'un des capuchons recevant un moyen de rappel élastique disposé entre son fond et l'embout de liaison solidarisé à l'axe.

Ces caractéristiques et d'autres encore ressortiront bien de la suite de la description.

Pour fixer l'objet de l'invention illustré d'une manière non limitative aux figures des dessins où :
- La figure 1 est une vue en coupe longitudinale d'un rouleau à axe escamotable dans un sens selon l'art antérieur.

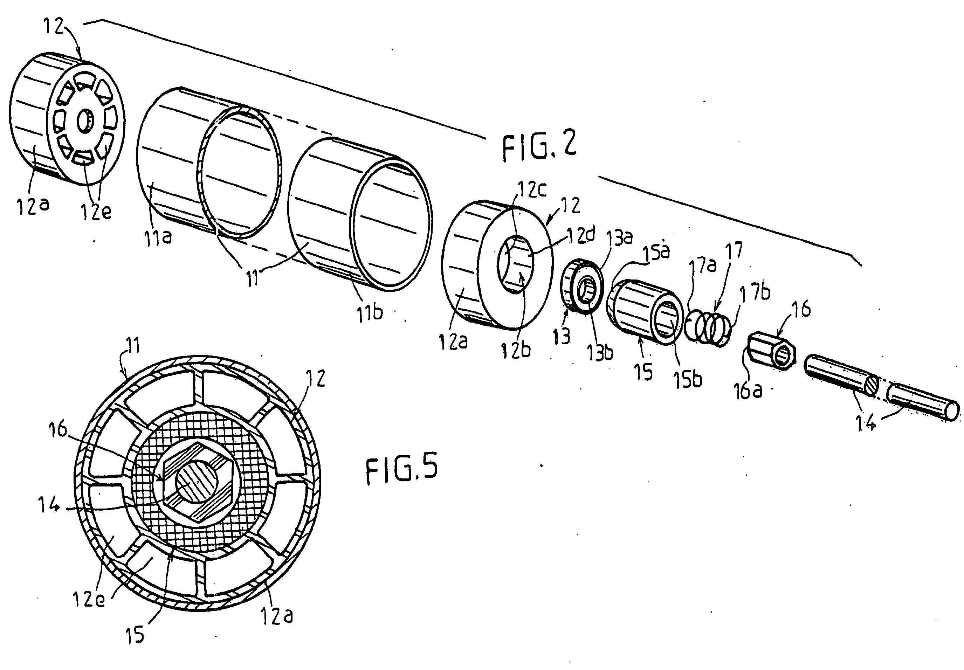

- La figure 2 est une vue en perspective et avant montage de ses composants du rouleau selon l'invention.
- Les figures 3 et 4 sont des vues en coupe longitudinale du rouleau selon l'invention dans la position de son axe escamotable en situation repos de non-sollicitation, puis en position de sollicitation.
- La figure 5 est une vue en coupe transversale du rouleau selon la ligne 5.5 de la figure 3.

Afin de rendre plus concret l'objet de l'invention, on le décrit maintenant d'une manière non limitative illustrée aux figures des dessins.

Le rouleau de manutention et de convoyage à axe escamotable dans un sens selon l'invention est référencé dans son ensemble par (10).

Ce rouleau comprend un tube cylindrique (11) de longueur appropriée aux extrémités (11.1-11.2) duquel sont disposés et emmanchés ou sertis par symétrie un boîtier cylindrique (12) en matière plastique ou autre matériau. Chaque boîtier (12) présente ainsi une portée cylindrique extérieure (12a) s'ajustant dans le tube, et dans la partie axiale et médiane, une portée annulaire (12b) intérieure formant logement et siège d'un moyen de roulement (13). Ce dernier vient ainsi en appui au fond (12c) de la portée annulaire (12b), sa cage extérieure (13a) en contact avec la paroi (12d) de la portée annulaire (12b) et sa cage intérieure (13b) en contact direct avec l'axe (14) escamotable. Cet axe est cylindrique. Chaque roulement (13) est monté serré dans le boîtier et coulissant sur l'axe. La partie arrière (15a) hémisphérique d'un capuchon (15) vient en contact avec la cage intérieure du roulement. Le capuchon (15) présente un logement intérieur (15b) qui permet le passage d'un embout de liaison (16) qui est emmanché sur l'axe escamotable (14). Le profil extérieur de cet embout est hexagonal ou autre.

Le capuchon a pour fonction complémentaire de servir d'entretoise pour éviter que le boîtier vienne frotter ou être en contact avec le chassis de l'installation non représenté aux dessins. Les embouts de liaison sont emmanchés à force sur l'axe (14).

L'un des deux capuchons reçoit dans son logement (15b) un ressort de rappel (17) tel que par exemple à boudins ou autres, dont une extrémité (17a) vient en fond de logement du capuchon et l'autre (17b) vient en appui sur la face arrière (16a) de l'embout de liaison (16).

L'ensemble des composants précités peut être monté et emmanché en une seule opération.

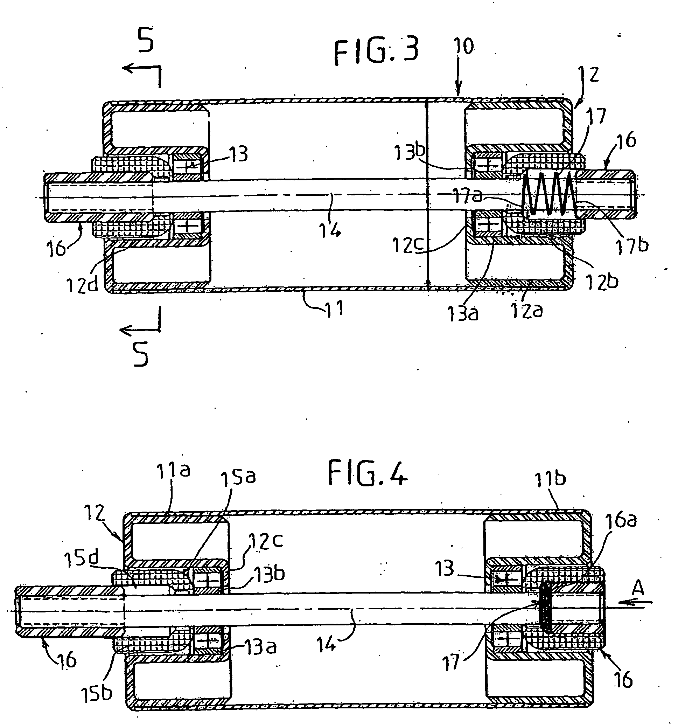

En se référant aux figures 3 et 4, on voit qu'en situation normale de non-sollicitation de l'axe (14), celui-ci est parfaitement centré par rapport au tube en débordant d'égale longueur, le ressort n'étant pas sollicité.

Par contre, en phase de sollicitation, selon la flèche A, l'embout de liaison (16) solidaire de toute manière appropriée à l'axe (14) par l'extrémité (14a) de celui-ci pénètre complètement dans le capuchon (15) correspondant de manière à ne plus être visible.
A contrario, l'autre extrémité (14b) de l'axe (14) sort de manière maximum par rapport au capuchon récepteur de l'embout associé.

Sous l'effet de relâchement de l'action de poussée selon la flèche A, l'axe reprend par détente élastique du ressort sa position initiale.

Ce nouveau concept de fabrication et de montage du rouleau offre de nombreux avantages.

Il y a tout d'abord une simplification et optimisation des composants et il n'y a plus d'opération d'usinage de l'axe. La tenue du moyen de rappel et son montage sont améliorés, et il n'y a plus de risque d'échappement du ressort par rapport à la zone de retenue initiale établie sur l'axe selon l'art antérieur.

Le montage est plus rapide et peut se faire en automatique, et en une seule fois, ce qui n'était pas le cas précédemment.

La configuration des boîtiers permet la réception de moyens de roulement plus réduits et donc moins coûteux.

Le montage par emmanchement des boîtiers de liaison sur l'axe permet d'optimiser la tenue de ceux-ci, et il n'y a quasiment aucun risque de démontage.

Par ce fait, les capuchons, roulements et ressorts sont montés librement sur l'emmanchement des embouts qui permet la fixation de tout l'ensemble.

Une telle conception est particulièrement adaptée aux rouleaux de petits diamètres.

Par ailleurs, on a représenté des boîtiers (12) avec différentes cavités d'allègement (12e).

## Revendications

1. Rouleau à axe escamotable dans un sens, du type comprenant un axe traversant un tube cylindrique et déplaçable à l'encontre d'un moyen de rappel, du type comprenant un dit tube (11) qui reçoit à chacune de ses extrémités (11.1-11.2) un boîtier (12) cylindrique s'ajustant à emmanchement ou sertissage dans la cavité correspondante, chaque boîtier étant agencé dans sa partie axiale médiane avec une portée annulaire (12b) intérieure formant logement et siège d'un moyen de roulement (13) par rapport à l'axe escamotable (14) **caractérisé en ce que** ladite portée annulaire forme siège et réception d'un capuchon (15) recevant lui-même un embout (16) de liaison solidarisé à l'axe escamotable, l'un des capuchons recevant un moyen de rappel élastique (17) disposé entre son fond et l'embout de liaison solidarisé à l'axe.

2. Rouleau selon la revendication 1, **caractérisé en ce que** chaque boîtier monobloc (12) présente une portée cylindrique extérieure (12a) s'ajustant dans le tube, et une portée annulaire (12) intérieure formant logement d'un moyen de roulement (13), ce dernier venant en appui au fond (12c) de ladite portée annulaire (12b), la cage extérieure (13a) du roulement étant en contact avec la paroi de la portée annulaire (12b) et la cage intérieure en contact avec l'axe, chaque roulement étant maintenu monté serré dans le boîtier et coulissant sur l'axe et **en ce que** la partie arrière hémisphérique (15a) du capuchon vient en contact sur la cage intérieure du roulement.

3. Rouleau selon l'une quelconque des revendications 1 et 2, **caractérisé en ce que** les embouts de liaison sont emmanchés à force sur l'axe (14).

4. Rouleau selon l'une quelconque des revendications 1 et 3, **caractérisé en ce que** les différents composants sont montés en une seule opération.

## Claims

1. A roller with a shaft that can be retracted in one direction of the type comprising a shaft that passes through a cylindrical tube and can be moved in opposition to a return means of the type comprising a tube (11), each end of which (11.1-11.2) accommodates a cylindrical case (12) that is fitted or crimped into the corresponding cavity, the middle axial part of each case being designed with an internal annular bearing surface (12b) forming a receptacle and seat for a bearing (13) for the retractable shaft (14) **characterised in that** said annular bearing surface forms a seat and accommodates a cap (15) that itself accommodates a connecting end fitting (16) attached to the retractable shaft, one of the caps accommodating an elastic return means (17) located between its bottom and the connecting end fitting attached to the shaft.

2. A roller as claimed in claim 1, **characterised in that** each one-piece case (12) has an external cylindrical bearing surface (12a) that fits into the tube and an internal annular bearing surface (12b) forming a receptacle for a bearing (13), the latter resting against the bottom (12c) of said annular bearing surface (12b), the external cage (13a) of the bearing being in contact with the wall of the annular bearing surface (12b) and the internal cage being in contact with the shaft, each bearing being held clamped in the case and sliding on the shaft and **in that** the rear hemispherical part (15a) of the cap comes into contact with the internal cage of the bearing.

3. A roller as claimed in either claim 1 or 2, **characterised in that** the connecting end fittings are force fitted onto the shaft (14).

4. A roller as claimed in either claim 1 or 3, **characterised in that** the various components are mounted in a single operation.

## Patentansprüche

1. Förderrolle mit in einer Richtung einziehbarer Achse, die eine Achse besitzt, welche durch ein zylindrisches Rohr führt, das gegenüber einem Rückholelement verschiebbar ist, und ein Rohr besitzt (11), das an jedem seiner Enden (11.1-11.2) ein zylindrisches Gehäuse (12) aufnimmt, das sich durch Einstecken oder Einpressen in den entsprechenden Hohlraum anpasst, wobei jedes Gehäuse in seinem mittleren, axialen Teil mit einer ringförmigen, inneren Auflagefläche (12b) angeordnet ist, die gegenüber der einziehbaren Achse (14) Aufnahme und Sitz für eine Rolle (13) bildet, **dadurch gekennzeichnet, dass** die ringförmige Auflagefläche Sitz und Aufnahme für eine Kappe (15) bildet, welche wiederum ein Verbindungsstück (16) aufnimmt, das mit der einziehbaren Achse verbunden ist, wobei eine der Kappen ein elastisches Rückholelement (17) aufnimmt, das zwischen ihrem Boden und dem mit der Achse verbundenen Verbindungsstück angeordnet ist.

2. Rolle nach Anspruch 1, **dadurch gekennzeichnet, dass** jedes Einblockgehäuse (12) eine zylindrische, äußere Auflagefläche (12a) besitzt, die sich an das Rohr anpasst, sowie eine ringförmige, innere Auflagefläche (12), welche Aufnahme und Sitz für eine Rolle bildet (13), wobei letztere sich am Boden (12c) der ringförmigen Auflagefläche (12b) abstützt, und das Außengehäuse der Rolle mit der Wand der ringförmigen Auflagefläche (12b) und das Innengehäuse mit der Achse in Berührung steht, und wobei jede Rolle fest in dem Gehäuse montiert ist und gehalten wird und auf der Achse gleitet, und dass der hintere, halbkreisförmige Teil (15a) der Kappe mit dem Innengehäuse der Rolle in Berührung kommt.

3. Rolle nach einem der Ansprüche 1 und 2, **dadurch gekennzeichnet, dass** die Verbindungsstücke mit Kraftausübung auf die Achse (14) aufgepresst werden.

4. Rolle nach einem der Ansprüche 1 und 3, **dadurch gekennzeichnet, dass** die verschiedenen Bauteile in einem einzigen Arbeitsgang montiert werden.
